# EUROPÄISCHE PATENTANMELDUNG

(11) **EP 1 672 135 A2**
(43) Veröffentlichungstag der Anmeldung: **21.06.2006**
(21) Anmeldenummer: 05474002.2
(22) Anmeldetag: 12.12.2005
(51) Int. Cl.: E04B 2/86, E04C 1/40

(54) **Verlorenenes Schalungselement mit sandwichartiger Struktur**

(30) Priorität: 13.12.2004 SK 50282004
(71) Anmelder: Kocis, Ivan, 841 05 Bratislava (SK)
(72) Erfinder: Kocis, Ivan, 841 05 Bratislava (SK)

(57) **Zusammenfassung**

Die Erfindung betrifft ein Bausystem mit Sandwichmodulen, die eine verlorene Isolierform bilden.

Das Sandwichmodul besteht aus einer ersten Außenschicht (1), zweiten Innenschicht (2) mit niedriger spezifischen Dichte und einer dritten Schicht (3). Die erste Außenschicht (1) besteht aus einer Ansichtsschicht (1a) und einem tragenden Teil der ersten Schicht (1b) von der ersten Außenschicht. Die Oberfläche der ersten Ansichtsschicht (1a) wird durch dünne Papier-, Plastfolie-, Tapetenschicht u.ä. gebildet. Der tragende Teil der ersten Schicht (1b) wird durch ein Gemisch des organischen oder anorganischen Fasern mit Zement oder Gips gebildet. Die dritte Sandwichschicht (3) bildet einen Teil der verdeckten Form oder ist selbst ein tragendes Hausteil- Element.

Die Sandwichmodul wird dadurch hergestellt, dass in eine Forme (7) eine oberflächige Ansichtsschicht (1a) gelegt wird, danach wird die der ersten Schicht bildende Mischung bestehend aus Zement - Sand, Faser - Zement oder Gips hineingelegt. Folgend wird ein Komposition aus pflanzlichen Material gelegt, wie Hackschnitzel, Splitter, gehackte Pflanzen und zusätzlich Zement oder Plast. Zuletzt wird die dritte oberflächige Sandwichschicht gebildet, eventuell mit Bewehrung.

## Beschreibung

### Bereich der Technik

Das Patent betrifft das Baukastensystem, insbesondere das grundlegende Sandwichmodul der verlorenen Isolierform und die Art und Weise ihrer Fertigung wie auch die Art der Integration der Ansichts- und Untersichtoberflächen.

### Bisheriger Stand der Technik

Allgemein folgen die Bausysteme einige Grundziele der Endbauform:
- Nutzwert
- Sicherheit, Feuerschutz- und Lärmschutzeigenschaften
- niedrige Betriebskosten
- Annäherung der Industriebauweise
- Modularität
- Bauökonomie
- niedriger Energieverbrauch
- gesundes Raumklima
- Verwendung von ökologischen Baumaterialien
- Verwendung von Recyclingsmaterialien
- Reduktion der nötigen Qualifikation der Bauarbeiter
- ökologische Faktoren

Bis jetzt ist es in keinem System gelungen, die Mehrheit der angegeben Ziele zu erfüllen und es wird nur auf manche von ihnen die Aufmerksamkeit gerichtet.

Im Laufe der zweiten Hälfte des zwanzigsten Jahrhunderts haben sich auch einige Massensysteme durchgesetzt (Plattenbauweise, Montagebauweise leichter Häuser, verlorene Isolierschalung, Gussbeton, Stahlkonstruktionen etc.). Einige Systeme etablierten sich Jahrhunderte lang (Ziegelbau, Holzbau).

Das Erreichen von einigen partiellen Zielen beschreiben folgende Patente:
Bis heute ist es nicht erfolgreich gelungen, besonders die Kriterien des niedrigen Preises, den niedrig energetischen Eigenschaften, der niedrigen Qualifikation der Arbeiter, den zugänglichen Materialien und Recyclingsmaterialien, des Schutzes zusammenzufügen.
Eine interessante Lösung aus der Sicht der statischen Eigenschaften und Isoliereigenschaften ist in US6705055 beschrieben, begründet auf Basis des Schaum- (Polystyrol, Polyuretan u.ä.) Isolierkerns beidseitig verkleidet mit dem gegeseitig verknüpften Ausbaugitter, das mit dem Spritz- oder Gussbeton gefüllt ist. Ein Manko dieser Lösung ist der große Arbeitsaufwand, die Komplikation der Integration der Fenster und der Türen und niedrige Modularität (großflächtige Bauplatte). Das Patent betrifft die Fertigungsarbeiten und die Oberfächen nicht. Eine ähnliche Lösung schlägt US6729090 vor.

Das nach der maximalen Reduktion menschlicher Arbeit auf der Baustelle strebende Bausystem (statistisch bis 60% der Kosten) ist in US6494013 beschrieben. Die Modularität des Systems ist mit den integrierten Instalationen und Oberfächen. Das System basiert aber auf großflächigen Holzplatten mit den niedrigen statistischen Eigenschaften, Feuer- und Schallschutzeigenschaften.

Die kostenreduzierende Lösung US4841705 ist auf dem mehrlagigen Modularbaukasten gegründet, auf Basis leichter Baumaterialien und ungewebter Matten, die das Wärmedämmmaterial bedecken und erfüllt nur einige Kriterien für den ökologischen und ökonomischen Bau.
Um eine gesamte Hausbaukastenlösung bemühen sich die Lösungen auf Basis der großflächigen Platten beschrieben in US5724783 und US6349509.

Das Patent DE19901433 löst den Gebrauch von dem Zement ― Holzhackschnitzel als Hauptmaterial aufgefüllt in den Holzrahmen für die Verwendung als Deckenplatten und ähnlich DE3627647 löst die Wandplatte. Das System lässt jedoch die Problematik der Fertigungsarbeiten und der Oberflächenbearbeitung völlig aus.

Die Technologieproblematik der Verbindung von Holzhackschnitzeln mit Zement löst bereits eine große Zahl der Patente aus der Mitte des vorigen Jahrhunderts . Meistens unterscheiden sie sich durch verschiedene Additive für die Eliminierung der Wirkung von Polysachariden auf die Zementeigenschaften und das Aushärtungsverfahren. Einige sind einphasig, einige zweiphasig, die zuerst die Mineralisierung des Hackschnitzels durchführen und erst in der zweiten Phase als Agglomerat in die Betonmischung eingehen (z.B. US3271492, US5019170, US 5314744, US5945044, US6464775 und viele anderen).

Um eine komplexe Lösung des Hausbaukastens in allen seinen Komponenten bemüht sich US5657597 mit dem Ziel der maximalen Standardisierung und der Modularität mit reduziertem Kostenaufwand für die Qualifikation der Bauarbeiter. Das Manko des Systems ist die umfangreiche Verwendung vom Stahl und dadurch Preis- und Materialaufwand und die fragliche Feuerbeständigkeit.

Die klassische Verwendung der verlorener Isolierform (Verschalung) ist in Dutzenden von Patenten beschrieben, die sich voneinander durch die Gussbetonöffnungen unterscheiden, durch die Form der Verknüpfungen zwischen zwei Formenteilen und auch durch die Integrierung der Armierung. Unter anderen kann man z.B. US5839243 erwähnen, mit der integrierten Abführung der technologischer Feuchtigkeit und auch mit den Positionierelementen. US5568710 klärt die Metallspangen zwischen zwei Polystyrolwänden.
Die meisten Lösungen für die verlorene Isolierform basieren auf der Verwendung von Polystyrol, Polyuretan und dadurch erfüllen sie die ökologischen Anforderung nicht.

Einen positiven Trend stellen die Lösungen auf Holzhackschnitzel-Basis dar, besonders in Europa, wo die bahnbrechende Lösung seit einigen Jahrzehnten das Blockstein-System DURISOL repräsentiert. Dieses System ist hoch ökologisch und hat gute statische, wärme- und schalldämmende Eigenschaften. Das System löst jedoch die Integration der Fenster, der Türen nicht und alle Fertigungsarbeiten sind des klassischen Typs. Andere ähnliche Firmenlösungen unterscheiden sich voneinander durch unwichtige Modul- bzw. Paneelmerkmale.

Ähnlich positive Trends stellen Zement-Hobelspänensysteme Typus Heraklith WO94/04473 dar, die als selbständige Elemente oder in Verbindung mit der Polystyrolplatte hergestellt werden.
Holz, Sägespäne und Zementkompositionen sind viele Jahrzehnte bekannt, z.B. Xylolith US3788870 auf Basis von Magnesiumbeimengungen hauptsächlich für die Fußböden, die Auffüllungsschichten. In diese Kategorie gehören auch Patente auf die Zusammensetzung von Zement/Zellstofffasern, Zement/Plastfasern oder Zement-/ Metallfasern (unter anderen US5733671, US5021093). Diese Kategorie hat eine große Bedeutung für die tragenden Randschichten der Sandwichlösungen.

Im Zusammenhang mit dem Gussbetonkonzept muss man eine Menge leichter als Agglomerat in dem Betongemisch verwendeten Kompositionsmaterialien in Erwägung ziehen, z.B. die Verwendung von dem Polystyrolgranulat, unter vielen anderen US5974762.

Im Zusammenhang mit der Strukturlösung des Bausystems werden einige unpatentierte Lösungen erwähnt, z.B. eine ganze Menge von Lösungen für die Deckenkonstruktion auf Basis von dem dünnwandigen Schalengewölbe der Stützhalbzylinderform wie auch andere Schalen-, Kasetten- und Zellurärstrukturen verwendbar in der Großbauindustrie (Sporthallen, Stadien, Kongresshallen etc.).
Einige industriell produzierte Systeme erfüllen niedrig energetische Kriterien, allerdigs benutzen sie unökologische Materialien kombiniert mit Holz (Sandwichpolystyrol, Polyurethan, Mineralwolle auf Basis von Holzgerippe) und haben niedrige Feuerbeständigkeit und einen relativ hohen Preis.

Wärmedämmeigenschaften des Konstruktionssystems sind eines der erstrangigen Kriterien von Niedrigenergiehäusern. Die Benutzung vom Schaum auf Erdölbasis (Polystyrol u.ä.) oder der hoch energetischen Mineralwolle ist nicht gerecht. Deswegen spielen die ökologischen Lösungen auf Basis von Papierrecyklaten bzw. Holz- Zerfasserungszellstoff eine wichtige Rolle (z.B. US5871160). Eine Anzahl der Patente beschreibt die Applikation des Zerfaserungszellstoffes in die Strukturen des Hauses mittels Aufspritz oder Aufschüttung der Thermoisolierschicht. Der Zerfaserungszellstoff kann in die Platten oder Prismen u.ä. geformt werden.
Die hightech Lösungen für die Flug- und Weltraumindustrie wie auch für innovative Verpackungsmaterialien beschreiben die Technologien auf Reflexschichtbasis (Folie) in Verbindung mit der Luftschicht oder mit einer leichten porösen Schicht. Solche Lösungen sind auch was die Preise und Materialien betrifft vorteilhaft (US5230941, US5492267).

Bis jetzt ist es nicht gelungen, die Kriterien des niedrigen Preises, den niedrigenergetischen Eigenschaften, der niedrigen Qualifikation der Arbeiter, den zugänglichen Materialien und Recyclingsmaterialien und der Sicherheit zusammenzufügen.

Den wesentlichen Teil vom Preis, wie auch die Ansprüche auf die Qualifikation der Arbeiter bilden sog. Fertigungsarbeiten und Professionen besonders von der Oberflächenbearbeitung der Wände, des Putzes, der Gipsplatte, der Ansicht, der Fensterinstallation, der Installation der Wärmetechnik, Elektro, Wasser etc.
Das Erfüllen von den meisten hier angeführten Kriterien, besonders der niedrige Preis, niedriger energetischer Verbrauch, die Verwendung von den zugänglichen Materialien und den Recyclingsmaterialien, die Modularität, der niedrige Anspruch auf die Qualifikation der Arbeitskraft und die Beseitigung der grundlegenden Fertigungsarbeiten ist das Ziel der vorgelegten Erfindung.
Am meisten näherten sich der Synthese dieser Ziele die Systeme auf Basis der verlorener Isolierschalung, besonders auf Basis von dem Holzhackschnitzel und den Zementbindemitteln. Jedoch erfüllen sie den geforderten niedrigen Arbeitsaufwand, die Verwendung der Recyclingsmaterialien u.ä. nicht.

### Hauptgegenstand der Erfindung

Die Erfindung hat die Aufgabe, die oben genannten Defizite zu beseitigen und ein Bausystem des grundlegenden Sandwichmoduls der verlorenen Isolierform zu bilden, so damit bei den niedrigeren Produktionskosten und dem niedrigeren Materialverbrauch eine höhere Verwendbarkeit der elementaren Baumodulen im Bauwesen erreicht wird.
Diese Aufgabe ist gelöst durch das Bauelement des Sandwichmoduls der verlorenen Isolierform, das aus drei Schichten besteht, aus einer ersten Außenschicht, aus zweiter Innenschicht der niedrigen spezifischen Dichte und aus der dritten formierenden Schicht des Hauses.
Es ist günstig, wenn die erste Außenschicht des grundlegenden Sandwichmoduls aus einer Ansichtsschicht der ersten Funktionsschicht und aus der Außenschicht der tragenden Schicht der ersten Funktionsschicht besteht.
Weiter ist es vorteilhaft, wenn die zweite Innenschicht des grundlegenden Sandwichmoduls durch Verbundmittel auf Basis vom Zement und Agglomerat, günstig auf Basis der Pflanzenherkunft, den Recyclingsplasten, gebildet wird.
Weiter ist es vorteilhaft, wenn die dritte formierende Schicht des grundlegenden Sandwichmoduls aus dem tragenden Material besteht.
Im weiteren ist es günstig, wenn das grundlegende Sandwichmodul ein Bestandteil der verlorenen Form des tragenden Hausbestandteiles aus Gussbeton ist und mit seiner dritten formierenden Sandwichschicht ein Vertiefungssystem bis in die Innenschicht, die Form für die Elemente- wie die Rippen, die Kasetten und andere Funktionsvorsprünge aus dem Grundausguss der Tragemauer bildet.

Weiter ist es vorteilhaft, wenn das grundlegende Sandwichmodul eine Oberfläche der erster Sandwichansichtsschicht hat, bestehend aus einer dünnen Papierschicht, einer Plastfolie, einer Tapete, einer Folie mit Druck oder ohne.

Weiter ist es vorteilhaft, wenn bei dem grundlegenden Sandwichmodul der tragende Teil von der ersten Schicht durch eine Komposition der organischen und anorganischen Fasern und Zementgemisch oder Gips gebildet wird, wobei diese Zwischenschicht einen Ausbau aus dem dünnen Stahl oder Plast beinhalten kann.
Weiter ist es vorteilhaft, wenn das grundlegende Sandwichmodul ein Bestandteil von der Mauer, der Decke, dem Fußboden des Treppenhauses oder der Dachkonstruktion des Hauses ist.
Weiter ist es vorteilhaft, wenn das grundlegende Sandwichmodul die dritte Sandwichschicht hat, die ein Bestandteil von der verlorenen Form oder sie alleine ein tragender Teil von dem Hausteil ist.
Im weiteren ist es günstig, wenn die Ansichtsschicht der ersten Funktionsschicht ins Relief oder in die anderen Vorsprünge und Vertiefungen geformt wird.
Weiter ist es vorteilhaft, wenn zwischen die erste und die dritte Schicht des grundlegenden Sandwichmoduls die Verbindungsschnallen oder die Brücken eingefügt werden.
Weiter ist es vorteilhaft, wenn die dritte Schicht von dem grundlegenden Sandwichmodul geschwächt oder völlig ausgelassen ist.
Des weiteren ist es günstig, wenn die zweitte Schicht von dem grundlegenden Sandwichmodul aus Leichtbaumaterialien besteht.
Weiter ist es vorteilhaft, wenn die Außenschicht der ersten Funktionsschicht des grundlegenden Sandwichmoduls aus dem fertigen Material wie Bretter, keramische Fußbodenplatten, Fliesen u.ä. gestaltet ist.
Weiter ist es vorteilhaft, wenn bei dem grundlegenden Sandwichmodul auf einer oder mehreren Seitenflächen des Moduls eine durchgehende Vertiefung gemacht worden ist, besonders in der zweiten Schicht.
Weiter ist es vorteilhaft, wenn das grundlegende Sandwichmodul in der zweiten Schicht die mit Thermoisoliermaterial ausgefüllten Hohlräume hat bzw. auf ein Teil der Wände die Reflexfolie eingebracht wird.
Weiter ist es vorteilhaft, wenn die dritte Schicht des grundlegenden Sandwichmoduls von der Außenseite mit der Reflexfolie bedeckt ist.
Des weiteren ist es günstig, wenn die grundlegenden Sandwichmodule, die einen tragenden Teil des Hauses bilden, z.B. die Mauer, ein System der Formen der Dauerschalung bilden und mit der dritten Schicht in den Gussbetonraum umgedreht sind, die das zweite Formensystem der Dauerschalung bildenden Module mit der dritten Schicht in den Gussbetonraum umgedreht sind, in dem sich die Gitterbewehrung befindet, die gegenüber den beiden Modulsystemen in der bestimmten Entfernung durch die Hängestreben festgehalten wird, der Gussbeton füllt den Raum zwischen den beiden Modulsystemen aus, wobei der Gussbeton die Vertiefungen in den Modulen ausfüllt und eine Tragplatte und die Rippen für die Kasetten-, Zellurär- u.ä. Struktur bildet.
Weiter ist es vorteilhaft, wenn zwischen die Kontaktfächen der einzelnen grundlegenden Module bei dem Ausbau eine Dichtung gelegt wird.
Weiter ist es vorteilhaft, wenn den tragenden Teil des Hauses zwei Modulsysteme bilden, die bis zum Anschlag zu den Hängestreben durch den Draht und/oder die Schnalle festgezogen werden.
Weiter ist es vorteilhaft, wenn in dem tragendem Hausteil statt einigen Modulen die Fenster- und Türrahmen mit den Maßen identisch mit dem Vielfachen der Maße des Fundamentalmoduls eingefügt werden.
Weiter ist es vorteilhaft, wenn die Decken- und Fußbodenstruktur des Hauses aus den grundlegenden Modulen hergestellt ist und die grundlegenden Module zwischen zwei Tragbalken gelegt werden, mit der Schicht aus dem Ansichtsmaterial nach oben.
Weiter ist es vorteilhaft, wenn die Decken- und Fußbodenstruktur völlig oder teilweise angefertigte Tragbalken völlig mit dem Beton eingegossen sind, zusammen mit den eingefügten grundlegenden Modulen.
Weiter ist es vorteilhaft, wenn die Decken- und Fußbodenstruktur, die zweite und die dritte Schicht des grundlegenden Moduls in die Gewölbeform geformt wird.
Weiter ist es vorteilhaft, wenn die Decken- und Fußbodenstruktur, die zweite und die dritte Schicht des grundlegenden Moduls in die Gewölbeform geformt wird, die mit einer Reflexfolie bedeckt ist.
Weiter ist es vorteilhaft, wenn die Decken- und Fußbodenstruktur des grundlegenden Moduls miteinander positionell durch die Elemente für die genaue Positionierung fixiert sind, die in das grundlegenden Modul während seiner Herstellung hineingesetzt werden.
Weiter ist es vorteilhaft, wenn die Decken- und Fußbodenstruktur das grundlegende Modul bildet, zwischen die Tragbalken gelegt mit der Ansichtsschicht nach unten.
Weiter ist es vorteilhaft, wenn die Decken- und Fußbödenstruktur als Dachstruktur benutzt wird.
Weiter ist es vorteilhaft, wenn die Decken- und Fußbödenstruktur als die tragende Treppenhausstruktur benutzt wird.
Weiter ist es vorteilhaft, wenn die Inversionsart und Weise der Herstellung von dem grundlegenden Sandwichmodul der verlorenen Isolierform von dem Trag- und Dachteil des Hauses des Systems des Gussbetons des Sandwichtypus so gebildet ist, dass auf die Grundplatte der Form für die Herstellung des grundlegenden Moduls Oberflächen-Ansichtsschicht mit der Außenseite nach unten gelegt wird, danach wird Zement- mit Sand-, Faser- mit Zement- oder Gipsgemisch reingegossen, das den tragenden Teil der ersten Schicht bildet evt. mit Ausbau, folgend wird die zweite Schicht aus der Zusammensetzung von Pflanzenmaterial, Zement, den Additiven und eventuell gemahlener Plast gelegt, es wird ein Negativ für die Formen der Tragschicht des Gussbetons in die zweite Innenschicht geformt, es wird die dritte Oberflächenschicht des Sandwichs gebildet und eventuell wird eine Bewehrung in sie reingelegt.
Des weiteren ist es günstig, wenn die Inversionsart und Weise der Herstellung von dem fundamentalen Sandwichmodul der verlorenen Isolierform von dem Trag- und Deckenteil des Hauses des Gussbeton-Systems des Sandwichtypus als Bestandteil des letzten Schrittes gebildet ist, es wird auch ein Teil oder ganze Tragschicht aus Beton als Bestandteil des Baumoduls gebildet.
Des weiteren ist es günstig, wenn die Inversionsart und Weise der Herstellung von dem grundlegenden Sandwichmodul der verlorenen Isolierform von dem Trag- und Deckenteil des Hauses des Gussbeton-Systems des Sandwichtyps so gestaltet wird, dass in der Komposition der zweiten Schicht sich die Hohlräume für die Auffüllung mit dem thermoisolierenden Material bilden, eventuell ein Teil der Oberfäche mit der Reflexfolie bedeckt ist.
Weiter ist es günstig, wenn die Inversionsart und Weise der Herstellung von dem grundlegenden Sandwichmodul der verlorenen Isolierform von dem Trag- und
Deckenteil des Hauses des Gussbeton-Systems des Sandwichtyps so gestaltet wird, dass im Laufe der Bildung von den drei Schichten des grundlegenden Moduls mindestens in eine von ihnen die Elemente für die genaue Positionierung in dem künftigen Bau eingebracht werden.

### Übersicht der Bilder auf den Zeichnungen

Die eventuellen Ausfertigungen von der Erfindung sind auf den Zeichnungen abgebildet, wie folgt:
- Abb.1 stellt das grundlegende Modul mit seinen drei Funktionsschichten dar. Die erste Schicht 1 beinhaltet die Ansichtsschicht 1a mit Druck, Imitation von Holz, Fliesen, Parketten oder von verschiedenen Mustern,
- Abb. 2 stellt das grundlegende Modul dar, wo in der ersten Schicht 1 Vorsprünge und Vertiefungen in der Reliefform gebildet sind,
- Abb. 3 stellt das grundlegende Modul dar, wo in der zweiten 2 und der dritten Schicht 3 die Vertiefungen für das Formen z.B. von Rippen des Ausbaus 10 in dem Gussbeton 11 gebildet sind,
- Abb. 4 stellt das grundlegende Modul 7 dar, wo in der zweiten Schicht die Hohlräume 6 gebildet sind für die Aufnahme von Thermoisolier- Masse, und wo auf ein Teil der Wände eine Reflexfolie eingelegt wird 15,
- Abb. 5 stellt das grundlegende Modul dar, wo die dritte Schicht 3 zu Gewölbeform geformt wird,
- Abb. 6 stellt das Fertigungsverfahren des grundlegenden Moduls in die Form 5 dar, wo allmählich auf die Grundplatte 4 einzelne Funktionsschichten angefangen mit der ersten Schicht gelegt werden 1a, 1b durch die zweite Kompositionsschicht 2 bis zu der dritten Schicht 3,
- Abb. 7 stellt eine teilweise angefertigte Mauer auf Basis von grundlegenden Modulen dar 7, wo in die Lücke der zwei Modulsysteme 7 und 7' eine Gitterbewehrung 8 mit den Hängestreben 9 eingefügt und der Beton eingegossen wird,
- Abb. 8 stellt eine bevorzugte Fertigung der Betonplatte von der Mauer 11 dar, die Bewehrungsrippen einbezogen 10,
- Abb. 9 stellt die bevorzugte Fertigung des Deckenteiles mit der Verwendung von dem fundamentalen Modul dar, wo die erste Schicht 1 eine Trittschicht ist und die dritte Schicht 3 des Moduls in die Form des Traggewölbes geformt ist,
- Abb. 10 stellt die bevorzugte Fertigung des Deckenteiles dar, wo zwischen die Tragbalken 13 ein fundamentales Modul hineingelegt wird, mit der Ansichtsschicht 1a in der Richtung nach unten als Ansicht,
- Abb. 11 stellt eine Fertigung des grundlegenden Moduls 7 dar, wo an einer oder mehreren Seitenflächen entlang eine durchgende Vertiefung gebildet ist 14.

### Beispiel für die Verwirklichung der Erfindung

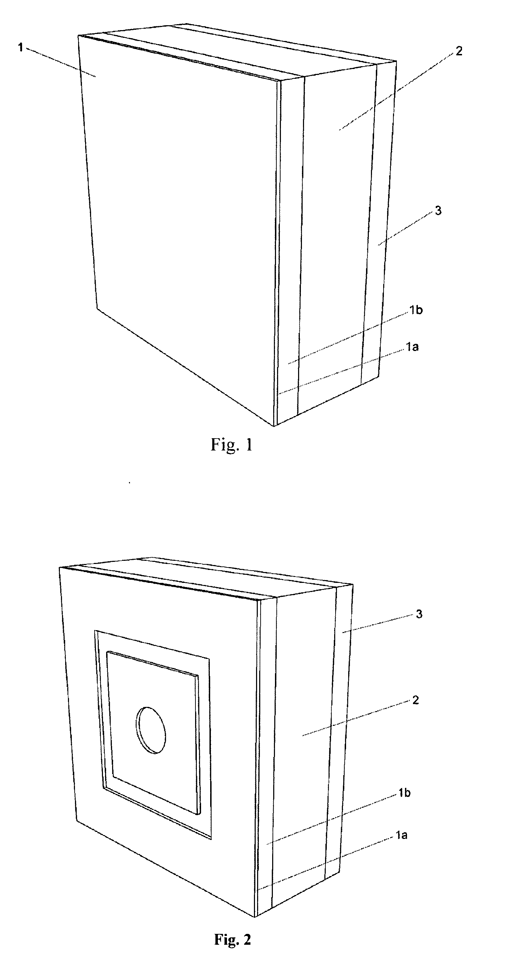

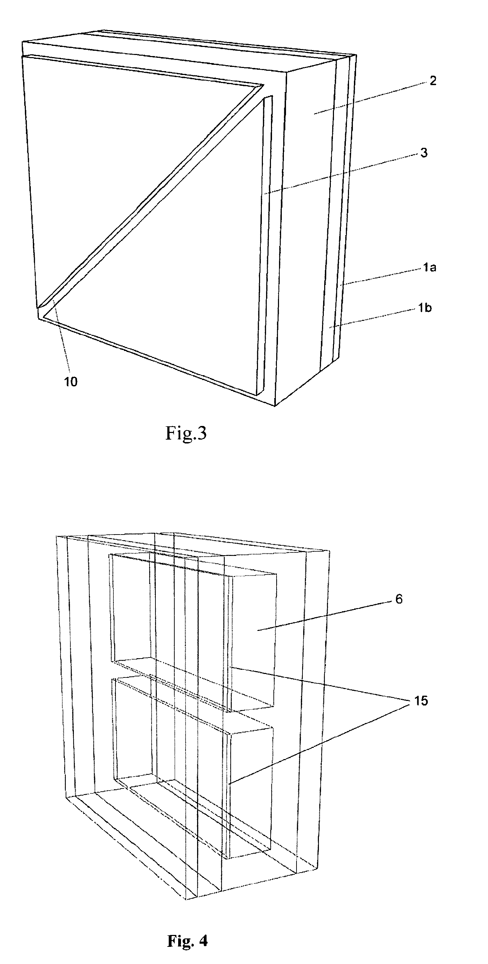

Das grundlegenden Modul besteht aus drei Schichten (Abb. 1, Abb. 2). Die erste Schicht 1 hat auf ihrer Außenoberfläche die Ansichts- bzw. Trittschicht z.B. Tapetenpapier, Folie mit Holzdesign, Folie mit Fußbodenplattendesign, Parkett, Dielenmarmor etc. Der zweite Teil der ersten Schicht besteht aus einer Schicht z.B. günstig 5 - 15 mm zusammengesetzten mit der Faser des bewehrten Zementgemischs mit dem Sand oder des Gipsgemischs oder eines anderen Trägermaterials. Die zweite Innenschicht 2 wird durch Kompositionsmaterial gebildet, z.B. Holzhackschnitzel, ein anderes Pflanzenmaterial (sog. energetische Pflanze) und Zementbinder.
Diese zweite Schicht 2 kann Hohlräume beinhalten (6) gefüllt mit dem Thermoisoliermaterial, wie der gemahlene Polystyrol (Recyclat) oder Abfall-Mineralwolle, zerfasserter Zellstoff oder Pflanzenisoliergemisch (Stroh), oder Folienrecyclat etc. Diese zweite Schicht kann auf ihrer der dritten Schicht anliegender Oberfläche verschiedene Vertiefungen für das Formen vom Gussbeton (11) in die Rippen, Kasetten, ins Gewölbe etc. beinhalten. Die dritte Schicht 3 kopiert im Wesentlichen die zweite Schicht 2 und bildet die Stoßstelle mit dem Gussbeton (dem tragenden Betonkern), oder ist sie selbst so gestaltet eventuell so verstärkt, dass sie ein Teil der tragenden Struktur des Hausteiles bildet, Abb. 3, Abb. 4, Abb. 5.
In der ersten 1 und der dritten Schicht 3 (zwischen die erste und die dritte Schicht) oder die erste 1 und die zweite 2 Schicht kann eine Schnalle, Brücke oder durchgehende Aussteifung gelegt werden.
In mancher Schicht sind die Legelemente 12 zum gegenseitigen Positionieren der fundamentalen Module fest eingebaut, z.B. ein Teil des Paares Feder/Nut, Pflock/Loch u.ä.
Die zweite Schicht 2 kann auch aus anderen leichten Baumaterialien bestehen, z.B. aus Porenbeton, Perlitzement, expandierter Keramik u.ä.
Die erste Schicht 1 kann aus dem Fertigmaterial gebildet werden, z.B. aus der Zement- Spanplatte oder aus Keramikfliesen, Wandfliesen u.ä. zusammengelegt werden.

### Beschreibung des Fertigungsverfahrens :

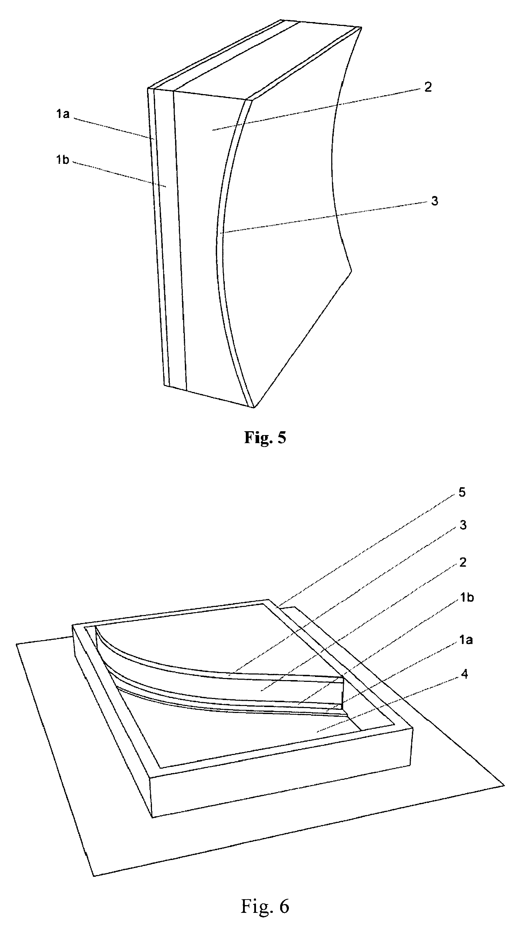

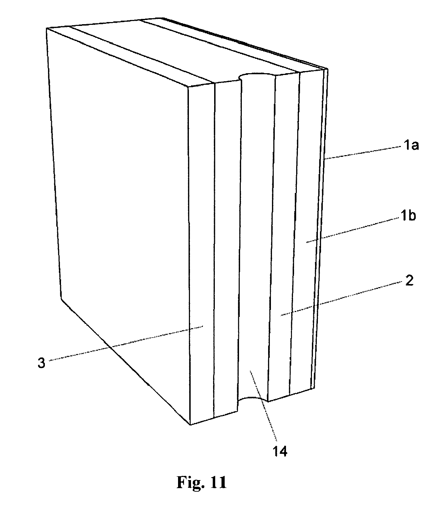

Auf die Grundplatte 4 Betonestrich, Ausguss, Holzfläche, Stahlblech u.ä.wird eine Form für die Fertigung des fundamentalen Moduls aus verschiedenen passenden Materialien gelegt.
Auf den Boden der Form wird die Ansichtsschicht 1a gebracht, wie Folie, Papier, Tapete, Folie mit Holzmuster, Folie mit Steinzeug-, Fliesen-, Dielen-, Parkettbild u.ä.,mit der Außenseite nach unten. Diese Folie erfüllt mehrere Zwecke, unter ihnen die Unterlagenfläche von den folgenden Schichten auf Zement- oder Gipsbasis u.ä. zu isolieren, weiter die künftige Nutzfläche wie Wandoberfläche, die Trittfläche, innere Isolierfläche gegen Witterung u.ä. zu bilden, Abb.6.
Folgend wird in die Form (5) der zweite Teil der ersten Außenschicht 1b des künftigen Sandwichs gegossen ― hineingelegt einige Millimeter dick, präferiert 5 bis 15 mm mit dem eventuellen Ausbau z.B. : im Umfang und in diagonalen Richtungen. Diese Schicht kann aus Zement-Sand-Komposition verstärkt mit der pflanzlichen Füllung - Faserstoff, Plastfasern, weiter Gipsmischung u.ä bestehen.
Folgend wird in die Form (5) das Material des Kompositum von dem pflanzlichen Agglomerat, Holzhackschnitzel auf Zementbasis eventuell mit dem Zusatz der Holzrecyclate verschiedener Art (gemahlener Plast, Papier-/ Plastlaminate u.ä.) hineingelegt, dann werden eventuelle Vertiefungen bzw. Vorsprünge in dieser zweiten Schicht geformt. Einige Hohlräume 6 können mit Thermoisolierstoff gefüllt werden, wie Recyclingspolystyrol, Mineralwolle, pflanzliche Isoliermischung u.ä., eventuell kann ein Teil der Wände mit der Reflexfolie bedeckt werden (15). Einige Vertiefungen 14 auf den seitlichen Modulflächen, die durchgehend durch die ganzen seitlichen Fläche laufen, dienen dem Abfuhr der technologischer Feuchtigkeit aus dem Gussbeton-Raum, Abb. 11. In die Form (5) wird dann der zweite Materialteil der zweiten Schicht gelegt 2, der die Thermoisolation bedeckt und mit seiner Oberfläche die Grundlage für die dritte Schicht bildet (3). Folgend wird in die Form (5) die dritte Schicht 3 des Sandwichs aus der Zementmischung hineingelegt mit der eventuellen Aussteifung aus Stahl oder Plast. Diese Schicht kann als ein Bestandteil einer Tragstruktur des Hauses geformt werden.
Im Laufe der Formierung von einzelnen Schichten werden mindestens in eine von ihnen die Elemente für die genaue Positionierung eingefügt 12, z.B. Teil Feder/ Nut, Teil Pflock/ Loch u.ä. und Spangen eventuell Brücken zwischen den Schichten gegenseitig.
Wie es zu sehen ist, so ein grundlegendes Modul (7) und die Art und Weise wie es angefertigt ist, bildet im Unterschied zu dem gegenwärtigen Stand der Technik neue Möglichkeiten und Eigenschaften:
- durch die einfache, genaue Art integriert es in einem Arbeitsverfahren die Ansichtsoberfäche, beseitigt den Bedarf an Fertigungstätigkeiten und Professionen
- mit der einfachen und präzisen (Ebenheit) Art und Weise bildet und integriert das Äquivalent der unteroberflächigen Schichten, (Gipsplatte, Putz, Verkeidung u.ä.) ohne die teueren Maschinen, Pressen zu benutzen, ohne Transportprobleme und Arbeitsaufwand
- das Modul in der bestimmten Ausführung integriert auch Thermoisolierschicht z.B. auf Schüttbasis aus Recyclingsmaterialien (gemahlener Polystyrol, Zerfasserungs-Recyclingspapier, Zellstof u.ä.), die ohne die teueren und aufwendigen Technologien nicht zustandekommen könnten
- das Modul in der bestimmten Ausführung integriert die formierende Verschalung zu komplizierten, Schalen-, Kasetten-, Rippenstrukturen mit einem oder mehreren Grundmodifikaktionen, Formen des fundamentalen Moduls
- das Modul in der bestimmten Ausführung integriert ein Teil oder die ganze Tragstruktur (Schale, Gewölbe, Kasette u.ä.), die ausreichend dünn sein kann und dabei transportfähig, weil sie mit den anderen Modulschichten zusammenwirkt.
- zu dem anderen Vorteil der Sandwichorganisation des grundlegenden Moduls gehört die Reduktion der Ansprüche auf mechanische Festigkeitsmerkmale der Kompositionsschicht, die mittels der ersten und dritten Schicht in einer Kompakteinheit instand gehalten wird, z.B. beim Transport.

Die erste und die dritte Schicht bilden einen bestimmten Container für die zweite Kompositionsschicht oder auch Thermoisolierschicht.
- alle drei Schichten des Moduls sind im Grunde in einem kontinuierlichen Nassprozeß hergestellt und sind praktisch integriert (laminiert) in ein Ganzes.
Dadurch wird die praktische Möglichkeit der Delaminierung im Transportablauf bzw. während der Benutzung reduziert.

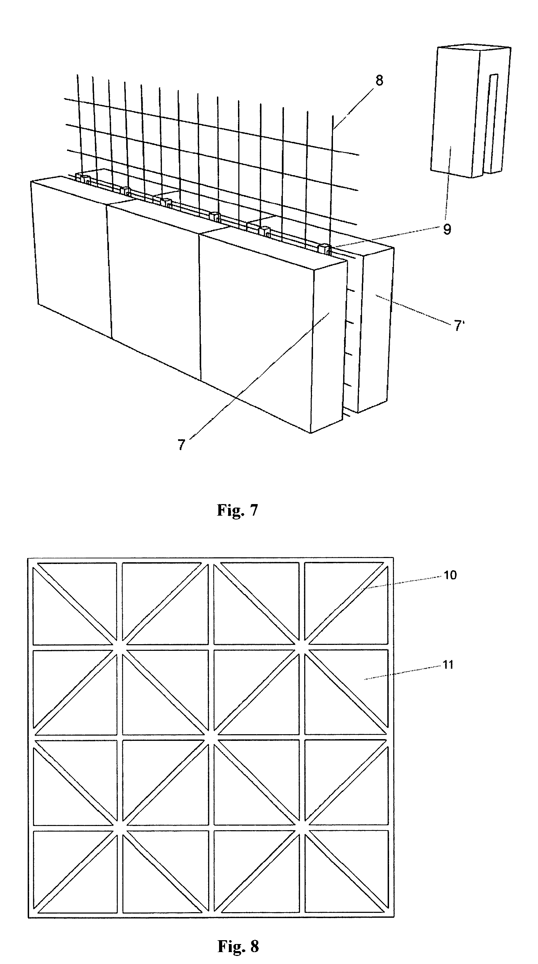

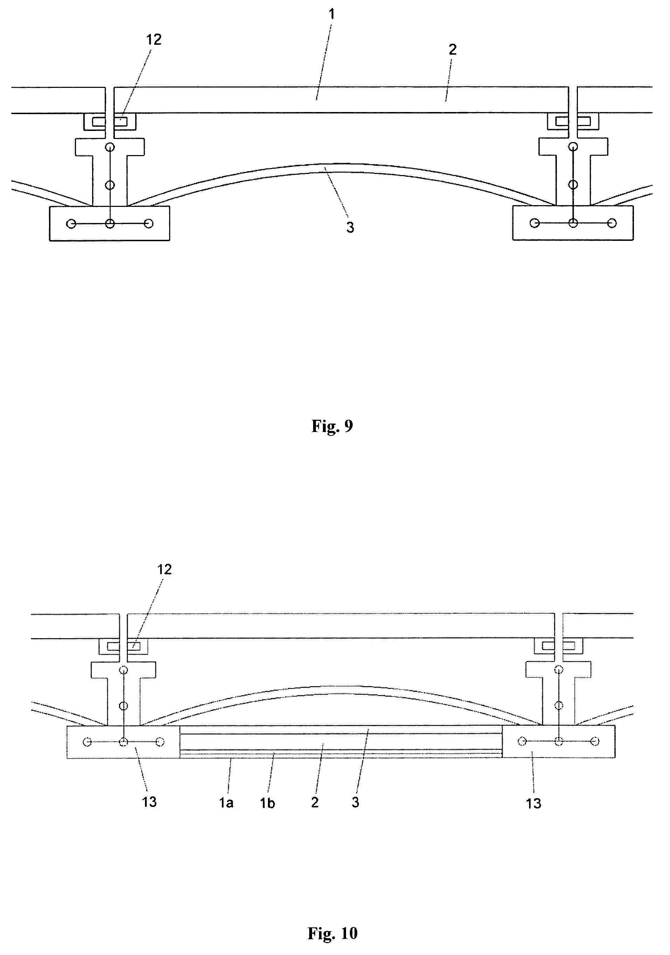

Im Stand der Technik ist die Art und Weise der Benutzung der verlorenen Isolierform bekannt und auch die Verwendung der grundlegenden Module für den Mauerbau auf Basis vom Gussbeton zwischen zwei Systemen der Isolierbretter (Schalung), die durch in die Isolierformen eingepressten oder zusätzlich eingelegten Spangen zusammengefügt und gespreizt sind.
In der von uns beschriebener Art und Weise der Maueranfertigung geht es um ein leicht parametrierbares Bausystem, wo die Entfernung der Module 7 und der anderen Module 7' durch die Hängestreben bestimmt wird 9 auf dem Ausbau gehängt 8 durchlaufend auf der ganzen Mauer verteilt, z.B. des Gittertyps ("KARI Matte"), Abb.7.
Die Grösse der grundlegenden Module ist in unserem Falle so gewählt, damit sie manuell durch eine oder zwei Personen handhabar sind, wobei sie, die Maße betreffend, zwischen Ganzwandplatten und den Maßen der üblichen Blocksteinen liegt.
Da die Module nach dieser Erfindung die Ansichtsschicht bereits integrieren, nach dem Betonerstarren ist die Mauer praktisch in der Lage, dem Endnutzen zu dienen.
Damit es nicht zu dem eventuellen Eindringen des Betons durch die Lücken zwischen den Modulen kommen würde, ist diese mit der Dichtung gefüllt.
An den Ausbau Typs Gitter knüpft der Mauerausbau des vorherigen Geschoßes bzw. die Bewehrung des Fundaments an und geht durchgehend in den Mauerausbau des nächsten Geschoßes ein.
Die Größe und die Art und Weise der Integration der Module in die Mauer bietet eine günstige Möglichkeit der direkten Integration der Fenster- und Türrahmen in die Mauer direkt während ihrer Anfertigung, wobei nach dem Erstarren durch den Beton ist das Fenster im Endzustand, die zusätzliche Dichtung und Bearbeitung der Scharfkanten und Sturzen ist nicht mehr erforderlich. Das Bausystem auf Basis der Module dieser Erfindung macht die Strukturen wie Tür- und Fensterschturz überflüssig.
Die Module, in denen in der dritten Schicht 3 die Vertiefungen in Form der Rippennegative 10 sind oder der anderen Ausbaustrukturen, erlauben durch ein Verfahren die komplizierten und die festen Mauerkonstruktionen zu bilden, die vorher im Bauwesen in der Mauerkonstruktion nicht verwendet wurden (Kasetten-, Zellurär-, Schalenstrukturen), die eine wesentliche Betonersparnis bei der gleichen Tragfähigkeit und Festigkeit ermöglichen, Abb. 8.
Eine fortlaufende Betonplatte der Mauer aus Gussbeton 11, aber beidseitig mit thermo- und schalldämmenden Schichten ausgestattet auf Basis Zement-Pflanzenkompositionen, bildet sehr gute Feuerschutz- und Schallschutzbedingungen z.B. bei Reihenhäusern.
Die Verwendung des grundlegenden Moduls nach dieser Erfindung ermöglicht die Vereinfachung des Produktionsverfahrens von der Decken- und Fußbodenstruktur dadurch, dass in einem Arbeitsprozeß des Auslegens der grundlegenden Module (7) mit der ersten Schicht 1 nach oben z.B. auf die Tragbalken Typ "I" 13 und unter Anwendug der Legeelementen, der Hängestreben 9 ebenfalls die Tritt-, Parkettschicht, Diele, Pflaster u.ä. größtenteils angefertigt wird, Abb. 9.
Die dritte Schicht 3 der zwischen den Tragbalken gelegten grundlegenden Module 13, die nach unten gelegt ist, kann auch flachliegend sein, aber vorteilhaft in die Gewölbeform geformt werden kann, wodurch sie zu einem Bestandteil der aktiven Tragstruktur wird und den Materialverbrauch reduziert, Abb. 9, Abb. 10).
Falls die Tragbalken Typs "I" oder "T" mit der teilweise enthüllten Armatur (Aussteifung) benutzt werden und diese zusammen mit den gelegten fundamentalen Modulen mit dem Beton begossen wird, wird eine kompakte Dach- und Fußbodenstruktur im Kern des finalen Nutzzustands erreicht.
Zwischen die Tragbalken kann das grundlegende Modul gelegt werden, mit der passenden Schicht nach unten, das eigentlich in dieser Schicht die Oberflächenbehandlung des finalen Äußeres bildende Ansichtsschicht 1a hat, z.B. Holzdessin, Mustertapete, weisse Tapete, Himmelbild u.ä., Abb. 10.
Wie es aus der Beschreibung ersichtlich ist, ist die Deckenstruktur im Laufe des grundlegenden Arbeitsablaufes der Deckenanfertigung auch von oben mit dem Fußboden und von unten mit der Untersicht ausgestattet.
Dadurch werden im hohen Ausmaß die aufwändigen und teueren Vorgänge der Legung von dem Fußboden und den Zwischenschichten, der Montage, z.B. Untersicht Gipskarton und die finale Oberflächenbehandlung, z.B. Anstrich beseitigt. Nach dieser präferierten Ausführung ist es möglich, auch die Dachstruktur mit der Neigung oder ohne anzufertigen.
In solch einer Dachstruktur kann die dritte Schicht in der Gewölbeform auch mit einer Reflexfolie bedeckt werden.

### Industrielle Verwendbarkeit

Die Erfindung beschreibt ein neues grundlegenden Baumodul des Sandwichtypus, das aus drei Hauptfunktionsschichten besteht, das die finalen Ansichts-Oberfächen integriert, die formierende eventuell die tragende Funktion der Bauverschalung und die Pflanzen- und Recyclingsmaterialien nutzende grundlegende Kompositionsschicht mit Isoliereigenschaften integriert. Die Erfindung beschreibt ebenfalls das geschutzte Verfahren der Anfertigung von so einem Sandwichmodul, sog. Inversionsverfahren (von der Oberflächen- Ansichtsschicht mit ihrer eigenen Tragfunktion durch die grundlegende komposite Wärme- und Schalldämmschicht bis zu der formierenden Schicht der Bauverschalung bzw. ein Teil der Tragfunktion.
Die Erfindung beschreibt auch einige präferierte Ausführungen, die die Neuheit und Vorteilhaftigkeit der Umsetzung des Moduls und seiner Verwendung zeigen.
Die Erfindung, wie es aus den angeführten präferierten Ausführungen, Bildern und auch dem Grundtext der Ansprüche sichtbar ist, diese und das fundamentale Modul und seine Art und Weise der Anfertigung der Hausteile (Mauer, Decke, Fußboden) ermöglicht:
- die Verwendung von Lowtech Eingangsmaterialien wie Holzhackschnitzel aus dem Abfall-Holzmaterial, gemahlener Recyclingsplast, gehackte Pflanzenmaterialien (schnell wachsende Hölzer und Pfanzen) in rückständigen Regionen zugänglich
- die Verwendung von einfachen Verfahren und Vorrichtungen für die Anfertigung der fundamentalen Module ohne den Anspruch auf große Investitionskosten
- die Verwendung lediglich der menschlichen Kraft für den Ausbau (ohne Kran), bzw. ohne große Mechanismen.
- die Nutzbarkeit von niedriger qualifizierter Arbeitskraft für die Anfertigung der Module und besonders für den Bau
- die Ausführung Higtech Bausystems mit hohem Nutzwert
- die Ausführung Hightech Niedrigenergiehaus mit niedrigen Ausbau- und Betriebskosten
- Programierbarkeit der Oberflächenbehandlungen, ob Fußboden, Deckenuntersichten oder Wandoberflächen während des Ausbaus vom sog. Rohbau
- einfaches und wirkungsvolles Integrieren der Fenster und Türen in die Wandstruktur
- die Flexibilität der Zielarchitekturen und der inneren Gliederung (Module des mittleren Maßes)
- Maßnormalisierung der Module und Hausteile.

Das grundlegende Modul und das Verfahren seiner Herstellung und der Anfertigung von Hausteilen macht das Modul, wie auch das Verfahren, besonders für die Hersteller von Holzhackschnitzel, Baufirmen im Bereich des niedrig energetischen Ausbaus günstig. Es ist geeignet für die Bildung von Arbeitsgelegenheiten in rückstängigen Forst- und Landwirtschaftsregionen.
Das grundlegende Modul und das beschriebene Verfahren ist für die Reihenbauweise , dem sozialen Wohnungsbau , wie auch Häuser mit dem hohen Nutzwert geeignet.

### Verzeichnis von Bezugszeichen:

- 1 -: erste Außenschicht
- 1a -: Ansichtsschicht der ersten Außenschicht
- 1b -: Tragende Schicht der ersten Außenschicht
- 2 -: zweite Schicht
- 3 -: dritte Schicht
- 4 -: Grundplatte
- 5 -: Form
- 6 -: Hohlraum
- 7 -: das grundlegende Modul
- 8 -: Ausbaugitter
- 9 -: Hängestreben
- 10 -: Rippenbewehrung
- 11 -: Gussbeton
- 12 -: Elemente für die genaue Positionierung
- 13 -: Tragbalken
- 14 -: durchlaufende Vertiefung

## Patentansprüche

1. Das grundlegenden Sandwichmodul der verlorener Isolierform für Trag- und Deckenteile des Hauses aus Gussbeton und die Inversionsart und Weise seiner Anfertigung wird **dadurch gekennzeichnet, dass** es aus drei Schichten besteht, aus der äußeren ersten Schicht (1), der zweiten Innenschicht (2) von der niedriger spezifischen Dichte und der formierenden dritten Schicht (3) des Hausteiles.

2. Das f grundlegende Sandwichmodul nach Punkt 1 wird **dadurch gekennzeichnet, dass** die erste Außenschicht (1) aus einer Ansichtsschicht (1a) und aus dem Tragmaterial besteht (1b).

3. Das grundlegende Sandwichmodul nach Punkt 1 wird **dadurch gekennzeichnet, dass** die zweite Innenschicht (2) durch ein Kompositionsmaterial auf Zement- und Agglomeratbasis gebildet wird, vorteilhaft auf Basis von pflanzlichem Herkunftsmaterial, Recyclingsplasten.

4. Das f grundlegende Sandwichmodul nach Punkt 1 wird **dadurch gekennzeichnet, dass** die dritte formierende Schicht (3) aus dem tragenden Material besteht.

5. Das grundlegende Sandwichmodul nach Punkt 1 wird **dadurch gekennzeichnet, dass** es mit dem Bestandteil der verlorener Form des tragenden Teiles des Hausteiles aus Gussbeton mit seinem dritten Sandwichteil (3), dem System der Vertiefungen bis in die Innenschicht (2) eine Form für Elemente wie Rippen (10), Kasetten und andere Funktionsvorsprünge aus dem Hauptausguss der Tragemauer bildet.

6. Das fundamentale Sandwichmodul nach Punkt 1 wird **dadurch gekennzeichnet, dass** die Oberfläche der Ansichtsschicht (1a) des Sandwiches mit einer dünnen Papierschicht, Plastfolie, Tapete, Folie mit Druck oder ohne gebildet wird.

7. Das grundlegende Sandwichmodul nach Punkt 1 und 2 wird **dadurch gekennzeichnet, dass** das tragende Material (1 b) der ersten Schicht (1) durch ein Kompositum der organischen und anorganischen Fasern und Zementgemisch oder Gips gebildet wird, wobei diese Zwischenschicht den Ausbau aus dem dünnen Stahl oder Plast beinhalten kann.

8. Das grundlegende Sandwichmodul nach Punkt 1 wird **dadurch gekennzeichnet, dass** es ein Bestandteil der Mauer, der Decke, dem Treppenhausboden oder Dachkonstruktion des Hauses ist.

9. Das grundlegenden Sandwichmodul nach Punkt 1 wird **dadurch gekennzeichnet, dass** die dritte Sandwichschicht (3) ein Bestandteil der verlorener Form oder ein selbständiges Teil des Hausteiles ist.

10. Das grundlegende Sandwichmodul nach Punkt 1 und 2 wird **dadurch gekennzeichnet, dass** seine erste Schicht (1) ins Relief oder in die anderen Vorsprünge und Vertiefungen geformt wird.

11. Das grundlegende Sandwichmodul nach Punkt 1 wird **dadurch gekennzeichnet, dass** zwischen die erste (1) und die dritte Schicht (3) Verbundspangen oder Brücken eingefügt werden.

12. Das grundlegende Sandwichmodul nach Punkt 1 wird **dadurch gekennzeichnet, dass** die dritte Schicht (3) geschwächt wird oder sie fehlt völlig.

13. Das grundlegende Sandwichmodul nach Punkt 1 wird **dadurch gekennzeichnet, dass** die zweite Schicht (2) aus leichten Baumaterialien besteht.

14. Das fundamentale Sandwichmodul nach Punkt 1 wird **dadurch gekennzeichnet, dass** die Ansichtsschicht (1a) von der Außenschicht (1) aus dem fertigen Material wie Platten, Keramik-Fußbodenplatten, Wandfliesen u.ä. gebildet wird.

15. Das grundlegende Sandwichmodul nach Punkt 1 wird **dadurch gekennzeichnet, dass** auf einer oder mehreren seinen Seitenflächen eine durchlaufende Vertiefung (14), besonders in der zweiten Schicht (2) gebildet wird.

16. Das grundlegende Sandwichmodul nach Punkt 1 wird **dadurch gekennzeichnet, dass** in der zweiten Schicht (2) Hohlräume sind (6) mit dem Thermoisoliermaterial ausgefüllt, eventuell auf ein Teil der Wände eine Reflexfolie gelegt wird (15).

17. Das grundlegende Sandwichmodul nach Punkt 1 bis 9 wird **dadurch gekennzeichnet, dass** seine dritte Schicht (3) von der Außenseite mit einer Reflexfolie bedeckt wird (15).

18. Das den tragenden Hausteil bildende grundlegende Sandwichmodul nach Punkt 1 bis 9 wird **dadurch gekennzeichnet, dass** die Module, die ein Formensystem der verlorener Schalung bilden (5) mit der dritten Schicht (3) in den Raum des Gussbetons gewandt sind (11), die das System der zweiten Formen bildenden grundlegenden Module (7') der verlorenen Schalung mit der dritten Schicht (3) in den Raum des Gussbetons gewandt sind (11), in welchem sich der Ausbaugitter befindet (8), der gegenüber den beiden Modulsystemen in der bestimmten Entfernung mittels Hängestreben gehalten wird (9), der Gussbeton (11) füllt den Raum zwischen den beiden Modulsystemen aus und bildet die Tragplatte, wobei der Gussbeton (11) die Vertiefungen in den Modulen ausfüllt und die Rippen bildet (10) für die Kasetten-, Zellurär- und ähnliche Struktur.

19. Das den tragenden Hausteil bildende grundlegende Sandwichmodul nach Punkt 18 wird **dadurch gekennzeichnet, dass** auf die Kontaktflächen zwischen den einzelnen fundamentalen Modulen (7) und den zweiten fundamentalen Modulen (7') bei dem Ausbau eine Dichtung eingefügt wird.

20. Das den tragenden Hausteil bildende grundlegende Sandwichmodul nach Punkt 18 wird **dadurch gekennzeichnet, dass** zwischen zwei Modulsystemen, das grundlegende Modul (7) und das zweite grundlegende Modul (7') die Spreizbolzen geordnet werden (9) auf dem Ausbau (8) bis zum Anschlag zueinander mit dem Draht und/oder mit den Spangen zugezogen.

21. Das den tragenden Hausteil bildende grundlegende Sandwichmodul nach Punkt 18 wird **dadurch gekennzeichnet, dass** statt einigen Modulen die Fenster- und Türrahmen mit den Maßen identisch mit dem Vielfachen der Maße des fundamentalen Moduls (7) und des zweiten grundlegenden Moduls (7') eingefügt werden.

22. Das den tragenden Hausteil bildende fundamentale Sandwichmodul nach Punkt 18 wird **dadurch gekennzeichnet, dass** zwischen die Fenster- und Türrahmen und das fundamentale Modul (7) und das zweite fundamentale Modul (7') eine Dichtung hineingelegt wird.

23. Das die Decken- und Fußbodenstruktur des Hauses bildende grundlegende Sandwichmodul, aus den grundlegenden Modulen angefertigt (7) nach Punkt 1 und 17 wird **dadurch gekennzeichnet, dass** die grundlegenden Module (7) zwischen zwei Tragbalken eingefügt werden (13) mit der Ansichtsschicht nach oben (1a) .

24. Das die Decken- und Fußbodenstruktur bildende grundlegende e Sandwichmodul nach Punkt 23 wird **dadurch gekennzeichnet, dass** die völlig oder teilweise angefertigten Tragbalken (13) mit dem Beton zusammen mit den hineingelegten grundlegenden Modulen eingegossen werden (7).

25. Das die Decken- und Fußbodenstruktur bildende grundlegende Sandwichmodul nach Punkt 23 wird **dadurch gekennzeichnet, dass** die zweite (2) und die dritte (3) Schicht des fundamentalen Moduls (7) in die Gewölbeform geformt wird.

26. Das die Decken- und Fußbodenstruktur bildende grundlegende Sandwichmodul nach Punkt 23 wird **dadurch gekennzeichnet, dass** die zweite (2) und die dritte (3) Schicht des grundlegenden Moduls (7) in die Gewölbeform geformt wird, die mit einer Reflexfolie bedeckt ist (15).

27. Das die Decken- und Fußbodenstruktur bildende grundlegende Sandwichmodul nach Punkt 23 wird **dadurch gekennzeichnet, dass** die grundlegenden Module (7) miteinander lagefixiert werden mittels Elemente für die genaue Positionierung (12), in das fundamentale Modul eingefügt (7) während seiner Anfertigung.

28. Das die Decken- und Fußbodenstruktur bildende fundamentale Sandwichmodul nach Punkt 23 wird **dadurch gekennzeichnet, dass** zwischen die Tragbalken (13) ein grundlegenden Modul (7) mit der Ansichtsschicht nach unten gelegt wird (1a).

29. Das die Decken- und Fußbodenstruktur bildende fundamentale Sandwichmodul nach Punkt 23 wird **dadurch gekennzeichnet, dass** es als Dachstruktur benutzt wird.

30. Das die Decken- und Fußbodenstruktur bildende fundamentale Sandwichmodul nach Punkt 23 wird **dadurch gekennzeichnet, dass** es als tragende Treppenhausstruktur benutzt wird.

31. Die Inversionsart und Weise der Fertigung des grundlegenden Sandwichmoduls (7) der verlorenen Isolierform des Trag- und Deckenteils des Hauses des Gussbeton-Systems des Sandwichstyps wird **dadurch gekennzeichnet, dass** auf die Grundplatte (4) der Form (5) für die Anfertigung des grundlegenden Moduls (7) eine Ansichtsschicht gelegt wird (1a) mit der Außenseite nach unten, folgend wird die das tragende Material bildende Zement- oder Gipsmischung (1 b) der ersten Schicht (1) hineingegossen, eventuell mit der Armierung, danach wird die zweite Schicht gelegt (2) aus einer Zusammensetzung von Pflanzenmaterial, Zement, Additiven und eventuell aus dem gemahlenen Plast bestehend, es wird ein Formennegativ der tragenden Schicht des Gussbetons geformt (11) in die zweite (2) Innenschicht, es wird die dritte Oberflächenschicht des Sandwichs gebildet (3) und eventuell in diese eine Bewehrung hineingelegt.

32. Die Inversionsart und Weise der Fertigung des grundlegenden en Sandwichmoduls der verlorenen Isolierform des Trag- und Deckenteils des Hauses des Systems des Gussbetons des Sandwichstyps laut Punkt 31 wird **dadurch gekennzeichnet, dass** als ein Teil des letzten Schrittes auch ein Teil oder die ganze Tragschicht aus Beton als Teil des grundlegenden Baumoduls (7) gebildet wird.

33. Die Inversionsart und Weise der Fertigung des fundamentalen Sandwichmoduls der verlorener Isolierform des Trag- und Deckenteils des Hauses des Systems des Gussbetons des Sandwichstypus laut Punkt 31 wird **dadurch gekennzeichnet, dass** im Kompositum der zweiten Schicht (2) die Hohlräume (6) für das Auffüllen mit dem Thermoisoliermaterial gebildet werden, eventuell ein Teil der Oberfläche mit einer Reflexfolie bedeckt ist (15).

34. Die Inversionsart und Weise der Fertigung des fundamentalen Sandwichmoduls der verlorenen Isolierform des Trag- und Deckenteils des Hauses des Gussbeton- Systems des Sandwichstypus laut Punkt 31 wird **dadurch gekennzeichnet, dass** im Laufe der Bildung von drei Schichten des grundlegenden Moduls (7) mindestens in eine von denen die Elemente (12) für die genaue Positionierung in dem künftigen Bau eingelegt werden.
